# NEUE EUROPÄISCHE PATENTSCHRIFT

(11) **EP 3 331 736 B2**
(45) Veröffentlichungstag und Bekanntmachung des Hinweises auf die Entscheidung über den Einspruch: **23.10.2024**
(45) Hinweis auf die Patenterteilung: 03.04.2019
(21) Anmeldenummer: 16750714.4
(22) Anmeldetag: 02.08.2016
(51) Int. Cl.: B60T 13/66, B60T 17/22, G01M 17/08

(54) **VERFAHREN ZUR INBETRIEBNAHME EINES BREMSSYSTEMS MIT VORGEGEBENEN ZULASSUNGSVORAUSSETZUNGEN SOWIE SYSTEM ZUR INBETRIEBNAHME EINES BREMSSYSTEMS MIT VORGEGEBENEN ZULASSUNGSVORAUSSETZUNGEN**
METHOD FOR PUTTING A BRAKE SYSTEM HAVING SPECIFIED APPROVAL PREREQUISITES INTO SERVICE AND SYSTEM FOR PUTTING A BRAKE SYSTEM HAVING SPECIFIED APPROVAL PREREQUISITES INTO SERVICE
PROCÉDÉ DE MISE EN SERVICE D'UN SYSTÈME DE FREINAGE AVEC DES CONDITIONS D'AUTORISATION PRÉDÉFINIES ET SYSTÈME DE MISE EN SERVICE D'UN SYSTÈME DE FREINAGE AVEC DES CONDITIONS D'AUTORISATION PRÉDÉFINIES

(30) Priorität: 07.08.2015 DE 102015113078
(43) Veröffentlichungstag der Anmeldung: 13.06.2018
(73) Patentinhaber: KNORR-BREMSE Systeme für Schienenfahrzeuge GmbH, 80809 München (DE)
(72) Erfinder: GRUNWALD, Torsten, 82418 Seehausen am Staffelsee (DE); AURICH, Stefan, 86316 Friedberg (DE); SCHNEIDER, Stefan, 80995 München (DE); GÜNTHER, Frank, 80993 München (DE); KROPP, Matthias, 80993 München (DE)
(74) Vertreter: Prüfer & Partner mbB Patentanwälte · Rechtsanwälte
(86) Internationale Anmeldenummer: PCT/EP2016/068415
(87) Internationale Veröffentlichungsnummer: WO 2017/025384

(56) Entgegenhaltungen:
- WO-A1-2014/029581
- CN-A- 103 309 241
- CN-A- 104 374 586
- DE-A1- 102011 113 024
- US-A1- 2004 163 451

## Beschreibung

Die vorliegende Erfindung betrifft ein Verfahren und ein System zur Inbetriebnahme eines Bremssystems mit vorgegebenen Zulassungsvoraussetzungen, wobei das Bremssystem zumindest anteilig eine Reibungsbremse aufweist und wobei das Bremssystem weiter eine Steuerung mit einem initialen Steuerdatensatz zur Ansteuerung des Bremssystems im Betrieb aufweist.

Um ein Bremssystem, insbesondere ein pneumatisches und/oder hydraulisches Bremssystem mit zumindest teilweiser Reibungsbremse, in Betrieb zu nehmen, wird derzeit und gemäß Stand der Technik das Schienenfahrzeug bei der dynamischen Inbetriebsetzung (IBS) auf einer Teststrecke real getestet.

Diese Testfahrten werden derart durchgeführt, dass bei einer Referenzfahrt die initialen Werte für die Steuerdaten (initialer Steuerdatensatz) des Bremssystems getestet werden und dabei überprüft wird, ob das Bremssystems des Schienenfahrzeugs den vorgegebenen Zulassungsvoraussetzungen genügt. Sofern die Zulassungsvoraussetzungen nicht erreicht werden, werden solange iterativ Testfahrten durchgeführt, bis ein Steuerdatensatz für das Bremssystem gefunden ist, der es erlaubt, dass die Zulassungsvoraussetzungen eingehalten werden.

Aus der WO 2014/029581 A1 ist bereits ein Verfahren zur Inbetriebnahme zumindest eines Vorrichtung zum Anzeigen von Status- oder Diagnoseinformationen des Fahrzeugverbands in einem ersten Schienenfahrzeug eines aus mehreren Schienenfahrzeugen bestehenden Fahrzeugverbands bekannt, wobei die Vorrichtung auf der Basis wenigstens eines Satzes von Funktionsdaten betreibbar ist. Allerdings behandelt die WO 2014/029581 A1 nicht die Inbetriebnahme eines pneumatischen Systems.

Aus der WO 1996/031385 A1 ist eine Einrichtung zur Kompensation der auf ein Schienenfahrzeug wirkenden Querkräfte bekannt, dessen Wagenkasten über eine Federung auf mindestens einem Fahrgestell abgestützt ist und der über einen Querkompensator gegenüber dem Fahrgestell in Querrichtung verschiebbar ist. Dabei wird eine Querfederung zum Puffern dynamischer Schwingungen zugeordnet, die wahlweise in Abhängigkeit vom Fahrzustand zu- oder abschaltbar ist. In diesem Kontext ist auch ein Simulationsmodell offenbart, mit dem die Fahrdynamik eines mit der erfindungsgemäßen Querkompensationseinrichtung versehenen Fahrgestells simulierbar ist.

Die derzeitige dynamische Inbetriebsetzung eines Schienenfahrzeugs erfordert regelmäßig eine Vielzahl von Testfahrten, was mit einem enormen Aufwand an Personal, Material und auch Kosten für die Nutzung der Teststrecke verbunden ist.

Es ist daher die Aufgabe der vorliegenden Erfindung, ein Verfahren und ein System zur Inbetriebnahme eines Bremssystems mit vorgegebenen Zulassungsvoraussetzungen zu verbessern, insbesondere dahingehend, dass die Anzahl der Testläufe deutlich verringert werden kann.

Diese Aufgabe wird erfindungsgemäß gelöst durch ein Verfahren mit den Merkmalen das Anspruchs 1. Danach ist vorgesehen, dass ein Verfahren zur Inbetriebnahme eines Bremssystems mit vorgegebenen Zulassungsvoraussetzungen, wobei das Bremssystem zumindest anteilig eine Reibungsbremse aufweist, wobei weiter das Bremssystem eine Steuerung mit einem initialen Steuerdatensatz zur Ansteuerung des Bremssystems im Betrieb aufweist, wenigstens die folgenden Schritte umfasst:
- Es wird ein Referenzbetrieb durchgeführt und wenigstens eine Art von reaten Referenzbetriebsparametern des Bremssystems erfasst, wobei der Referenzbetrieb mindestens eine Testfahrt umfasst;
- es wird auf der Grundlage der Referenzbetriebsparameter ein virtuelles Modell des Bremssystems mit einem initialen virtuellen Steuerdatensatz, der dem initialen Steuerdatensatz entspricht, erstellt;
- auf der Grundlage des Modells wird wenigstens ein virtueller Testbetrieb durchgeführt, um das Erreichen der vorgegebenen Zulassungsvoraussetzungen zu überprüfen;
- anhand des virtuellen Testbetriebs wird der virtuelle Steuerdatensatz dahingehend überprüft, inwieweit dieser verändert werden muss, dass das Bremssystem die vorgegebenen Zulassungsvoraussetzungen erreicht und wenigstens ein Korrekturfaktor wird ermittelt, um einen korrigierten virtuellen Steuerdatensatz zu erhalten.

Die Erfindung basiert auf dem Grundgedanken, dass ein Teil des Testbetriebs nicht mehr im Rahmen realer Testfahrten absolviert wird, sondern zum vorzugsweise überwiegenden Teil virtuell. Hierzu wird anhand eines realen Referenzbetriebs wenigstens eine Art an Referenzparametern bestimmt, die das pneumatische System beschreiben bzw. charakterisieren. Diese Daten werden dann als Basis verwendet, um ein möglichst aussagekräftiges Modell des Bremssystems zu erstellen. Dieses Modell wiederum wird für eine Simulation verwendet, mittels derer ein virtueller Testbetrieb durchgeführt wird. Anhand dieses Testbetriebs werden weitere Erkenntnisse darüber gewonnen, inwieweit die initial gewählten Steuerungsdaten des pneumatischen Systems, auch initialer Steuerdatensatz genannt, eine Erreichung der vorgegebenen Zulassungsvoraussetzungen ermöglichen bzw. inwieweit die Steuerungsdaten abgeändert werden müssen, um die vorgegebenen Zulassungsvoraussetzungen zu erreichen.

Hierdurch wird es möglich, aufwendige Versuche und Testtage auf einer Versuchsstrecke zu vermeiden und insgesamt die Anzahl der real durchzuführenden Versuche zu verringern. Ggf. ist es sogar möglich, auf den realen Kontrollversuch zu verzichten. Folglich werden im realen Testbetrieb Iterationsschleifen vermieden, die durch einen Systemtest, eine Neueinstellung der technischen Parameter des Systems, und einen neuen Systemtest usw. entstehen. Insgesamt kann somit die Inbetriebnahme deutlich vereinfacht werden.

Der Begriff Steuerungsdatensatz umfasst Daten, die zur Steuerung und/oder Regelung des Bremssystems gewählt werden.

Der Begriff Referenzbetrieb kann eine Testfahrt oder auch mehrere Testfahrten umfassen.

Der Begriff Parameter bzw. Referenzbetriebsparameter ist insbesondere dahingehend zu verstehen, dass ein Parameter eine relevante Größe, die z.B. das Bremssystem bzw. Teile des Bremssystems oder das Verhalten Bremssystems beschreibt bzw. charakteristisch für dieses ist, beschreibt oder kennzeichnet.

Auf der Grundlage des korrigierten Betriebsparameter kann wenigstens ein Überprüfungsbetrieb durchgeführt werden, um das Erreichen der vorgegebenen Zulassungsvoraussetzungen in der Realität zu überpüfen. Erreicht man mit den initialen oder den abgeänderten Steuerungsdaten im virtuellen Testbetrieb die vorgegebenen Zulassungsvoraussetzungen des pneumatischen Systems, so werden diese vorteilhafterweise in einem realen Testbetrieb (realer Kontrollversuch) nochmals verifiziert.

Ferner kann ein initialer und/oder initialer virtueller und/oder korrigierter virtueller Steuerdatensatz wenigstens einen Wert umfassen, der im Zusammenhang mit einer Bremskraft und/oder einer Bremskraftverteilung und/oder einem Steuergerätealgorithmus des Bremssystems in Verbindung steht.

Denkbar ist beispielsweise, dass ein Steuerdatensatz einen Wert bzw. Sollwert für die Bremskraft und/oder Bremskraftverteilung (z.B. jeweils in Abhängigkeit von einem bestimmten Betriebszustand oder Fahrzustand) oder einen die Bremskraft und/oder Bremskraftverteilung definierenden Parameter aufweist.

Des Weiteren kann vorgesehen sein, dass auf der Grundlage der korrigierten Betriebsparameter der initiale Steuerdatensatz derart abgeändert wird, dass die Steuerdaten des Bremssystems den Zulassungsvoraussetzungen genügen. Dadurch wird erreicht, auf der Grundlage des virtuellen Testbetriebs der Steuerdatensatz für das Bremssystem derart z.B. automatisch oder halb-automatisch (z.B. nach vorherigem Check durch das Testpersonal) in das Bremssystem eingespielt wird und hierdurch die vorgegebenen Zulassungsvoraussetzungen erreicht werden.

Der Überprüfungsvorgang der Betriebsparameter kann anhand des virtuellen Testbetriebs eine Unterschiedsbetrachtung von virtuellem Testbetriebs und von Referenzbetrieb unfassen. Dadurch kann die Aussagekraft des virtuellen Testbetriebs vergrößert und stabiler ausgestaltet werden.

Insbesondere kann vorgesehen sein, dass die Unterschiedsbetrachtung eine Unterschiedsbetrachtung von virtuellem Testbetriebs und von Referenzbetrieb im Vergleich zu den vorgegebenen Zulassungsvoraussetzungen ist. Dadurch kann z.B. durch Interpolation auch im virtuellen Testbetrieb schneller eine Lösung des Optimierungsproblems gefunden werden.

Der virtuelle Testbetrieb kann die Überprüfung umfassen, ob das virtuelle Modell mit dem initialen virtuellen Steuerdatensatz oder mit dem während des Testbetriebs modifizierten virtuellen Steuerdatensatz die vorgegebenen Zulassungsvoraussetzungen erfüllt. Dies kann es letztlich auch ermöglichen, einen finalen Testbetrieb in der Realität überflüssig werden zu lassen, da bereits die virtuell erhaltenen Daten aussagekräftig genug sind. Mit Erfüllung der vorgegebenen Zulassungsvoraussetzungen endet der virtuelle Testbetrieb.

Weiter kann vorgesehen sein, dass ein virtueller Steuerdatensatz, der die vorgegebenen Zulassungsvoraussetzungen erfüllt, als korrigierter Steuerdatensatz auf das Bremssystem übertragen wird. Dadurch wird das Bremssystem einfach auf die vorgegebenen Zulassungsdaten eingestellt. Dies ermöglicht eine zügige Umsetzung der virtuellen Ergebnisse ins reale System.

Die Übertragung des korrigierten Steuerdatensatzes kann automatisch oder halbautomatisch erfolgen. Denkbar ist auch, dass die Übertragung des korrigierten Steuerdatensatzes teilweise oder vollständig manuell z.B. über eine Stellschraube oder der der gleichen (z.B. manueller Stellschieber oder manuelles Stellrad) möglich ist. Zur Übertragung des korrigierten Steuerdatensatzes kann ein digitales Interface vorgesehen sein. Das digitale Interface kann ein drahtgebundenes und/oder drahtloses Interface sein.

Des Weiteren kann vorgesehen sein, dass das Bremssystem eine pneumatische und/oder hydraulische Bremsanlage, insbesondere eine pneumatische und/oder hydraulische Bremsanlage eines Schienenfahrzeugs ist.

Es kann vorgesehen sein, ein Referenzbetriebsparameter ein Parameter ist, der mittelbar oder unmittelbar Luftverbrauch, Bremsweg, Ansprechverhalten, Gleitschutz, Ansprechzeit, Bremse, Befüllzeiten, Reibwerte, Fahrzeuggewicht, Bremskraft, Höchstgeschwindigkeit, Bremskraftverteilung, Ansprechverhalten auf Komponentenbasis, Steuergerätealgorithmen, Behältergrößen, Rohrleitungsdurchmesser, Rohrleitungslängen und/oder Druckabfall in Leitungen, Reibungsverluste, Energieverbrauch, Relativgeschwindigkeiten und/oder Schlupf des Bremssystems beschreibt.

Zu beachten ist, dass Werte, die im Zusammenhang mit einer Bremskraft und/oder einer Bremskraftverteilung und/oder einem Steuergerätealgorithmus des Bremssystems in Verbindung stehen, sowohl Referenzbetriebsparameter sein können, weil sie das Bremssystem beschreiben, als auch Teil eines Steuerdatensatzes sein können, weil sie entsprechend eingestellt werden können bzw. Daten sind, die zur Steuerung und/oder Regelung des Bremssystems gewählt werden.

Das Verfahren kann insbesondere im Zusammenhang mit einer dynamischen Inbetriebsetzung (IBS) im Rahmen einer Fahrzeugzulassung eines Schienenfahrzeugs erfolgen. Bisher wird für eine Fahrzeugzulassung eine Teststrecke angemietet und teilweise über Nacht in Fahrversuchen die Fahrzeugparameter durch auf dem Fahrzeug tätige Techniker ermittelt. Innerhalb des Fahrversuchs werden Parameter wie beispielsweise
- Luftverbrauch
- Bremsweg
- Ansprechverhalten Gleitschutz
- Ansprechzeit Bremse
- Befüllzeiten
erhoben.

Das virtuelle Modell (Simulationsmodell) gründet auf dem funktionellen Fahrzeugmodell mit den diesem Modell zugewiesenen technischen Parametern.

Zu diesen technischen Parametern zur Beschreibung des Bremssystems gehören, jedoch nicht ausschließlich:
- Reibwerte wie z.B. Bremsbelag/Bremsscheibe, Rad/Schiene
- Fahrzeuggewicht
- Bremskraft
- Höchstgeschwindigkeit
- Bremskraftverteilung
- Ansprechverhalten auf Komponentenbasis
- Steuergerätalgorithmen

Optional können weitere Parameter ermittelt werden. Zu diesen gehören beispielsweise, aber nicht ausschließlich
- Behältergrößen (des Bremssystems)
- Rohrleitungsdurchmesser (des Bremssystems)
- Rohrleitungslängen (des Bremssystems)
- Druckabfall in Leitungen (des Bremssystems), Reibungsverluste

Nach Fertigstellung des Simulationsmodells wird das Systemverhalten des Fahrzeugs simuliert.

Parameter, die bei der Simulation des Systemverhaltens des Fahrzeugs bestimmt werden sind unter anderem, jedoch nicht ausschließlich
- Bremsweg
- Luftverbrauch
- Befüllzeiten

Zusätzlich können weitere Parameter, untenstehend beispielhaft gelistet, ermittelt werden:
- Ansprechverhalten Gleitschutz
- Ansprechzeit Bremse
- Energieverbräuche
- Relativgeschwindigkeiten/Schlupf

Des Weiteren betrifft die vorliegende Erfindung ein System zur Inbetriebnahme eines Bremssystems mit vorgegebenen Zulassungsvoraussetzungen. Dieses System umfasst wenigstens die folgenden Merkmale:
- Ein Bremssystem mit wenigstens einer Steuereinheit, wobei die Steuereinheit wenigstens eine Dateneingangsschnittstelle und wenigstens eine Datenausgangsschnittstelle sowie wenigstens Steuerdatensatzspeicher aufweist;
- wenigstens einen Sensor zur Erfassung einer Art von realen Referenzbetriebsparametern des Bremssystems in einem Referenzbetrieb, wobei der Referenzbetrieb mindestens eine Testfahrt umfasst;
- wenigstens eine Simulationseinheit zur Erzeugung eines virtuelles Modells des Bremssystems mit einem initialen virtuellen Steuerdatensatz, der dem initialen Steuerdatensatz entspricht, auf der Grundlage der Referenzbetriebsparameter;
- wenigstens eine Überprüfungseinheit, mittels derer auf der Grundlage des Modells wenigstens ein virtueller Testbetrieb durchführbar ist, um das Erreichen der vorgegebenen Zulassungsvoraussetzungen zu überprüfen und wobei anhand des virtuellen Testbetriebs der virtuelle Steuerdatensatz mittels der Überprüfungseinheit dahingehend überprüfbar ist, inwieweit dieser verändert werden muss, dass das Bremssystem die vorgegebenen Zulassungsvoraussetzungen erreicht und wobei mittels der Überprüfungseinheit wenigstens ein Korrekturfaktor ermittelbar ist, um einen korrigierten virtuellen Steuerdatensatz zu erhalten.

Weiter kann wenigstens eine Korrektureinheit vorgesehen sein, um den korrigierten virtuellen Steuerdatensatz zur Steuereinheit des Bremssystems zu übertragen, um auf der Grundlage des korrigierten Betriebsparameter wenigstens ein Überprüfungsbetrieb durchzuführen, um das Erreichen der vorgegebenen Zulassungsvoraussetzungen in der Realität zu überpüfen.

Das System kann sämtliche im Zusammenhang mit dem vorstehend beschriebenen Verfahren offenbarten strukturellen und funktionalen Merkmale allein oder in Kombination verwirklichen und die entsprechenden Vorteile erreichen. Dies gilt auch umgekehrt, d.h. strukturelle und funktionale Merkmale, die im Zusammenhang mit dem System beschrieben sind, können auch Anwendung im Verfahren finden.

Des Weiteren kann vorgesehen sein, dass das Bremssystem eine pneumatische und/oder hydraulische Bremsanlage, insbesondere eine pneumatische und/oder hydraulische Bremsanlage eines Schienenfahrzeugs ist.

Mittels des Systems kann das Verfahren zur Inbetriebnahme eines Bremssystems mit vorgegebenen Zulassungsvoraussetzungen durchführbar sein.

Die Simulationseinheit kann im Fahrzeug selbst angeordnet sein.

Denkbar ist aber auch, dass die Simulationseinheit entfernt vom Bremssystem selbst bzw. entfernt vom Fahrzeug angeordnet ist. Dabei ist insbesondere denkbar, dass die Simulationseinheit über eine drahtlose Schnittstelle mit der Steuereinheit des Bremssystems verbunden ist.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Darstellung eines Ausführungsbeispiels des erfindungsgemäßen Systems, mit dem das erfindungsgemäße Verfahren durchführbar ist; und
- Fig. 2: ein Flussdiagramm des erfindungsgemäßen Verfahrens in einer mögliche Ausführung, das anhand des System gemäß Fig. 1 durchgeführt wird.

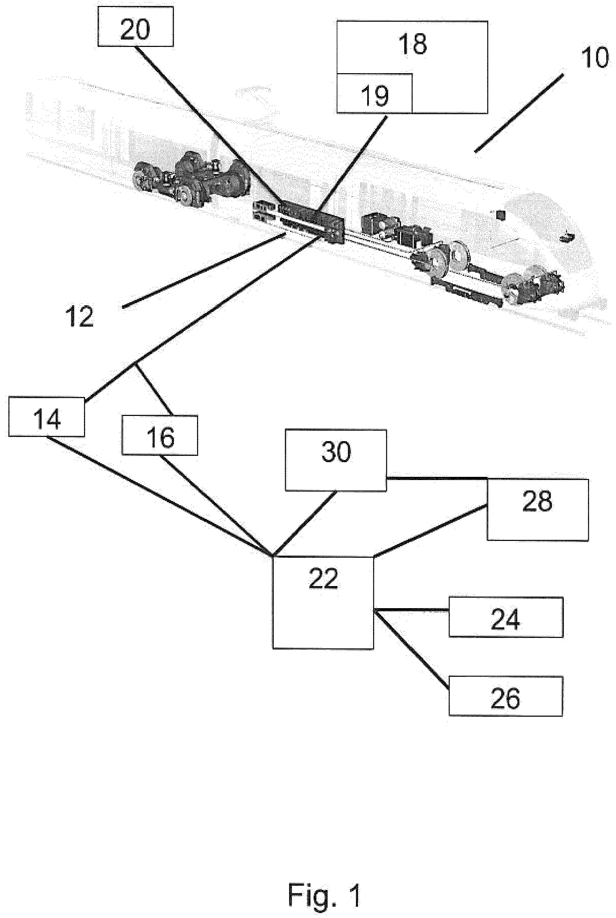

**Fig. 1** zeigt eine schematische Darstellung eines Ausführungsbeispiels des erfindungsgemäßen Systems zur Inbetriebnahme eines Bremssystems 10 mit vorgegebenen Zulassungsvoraussetzungen, mit dem das erfindungsgemäße Verfahren zur Inbetriebnahme eines Bremssystems 10 durchführbar ist.

Das Bremssystem 10 ist im hier beschriebenen Ausführungsbeispiel eine pneumatische Bremsanlage eines Schienenfahrzeugs und weist anteilig eine Reibungsbremse auf.

Das Bremssystem 10 weist eine Steuereinheit 12 auf, wobei die Steuereinheit 12 wenigstens eine Dateneingangsschnittstelle 14 und wenigstens eine Datenausgangsschnittstelle 16 sowie wenigstens Steuerdatensatzspeicher 18 für Steuerdatensätze aufweist. Eingangs ist in den Steuerdatensatzspeicher 18 ein initaler Steuerdatensatz 19 eingespeichert.

Ferner sind Sensoren 20 zur Erfassung Referenzbetriebsparametern des Bremssystems 10 z.B. in einem Referenzbetrieb vorgesehen.

Die Sensoren 20 sind geeignete Sensoren, um Betriebsparameter wie
- Reibwerte wie z.B. Bremsbelag/Bremsscheibe, Rad/Schiene
- Fahrzeuggewicht
- Bremskraft
- Höchstgeschwindigkeit
- Bremskraftverteilung
zu erfassen.

Ferner ist eine Simulationseinheit 22 zur Erzeugung eines virtuelles Modells 24 des Bremssystems 10 mit einem initialen virtuellen Steuerdatensatz 26, der dem initialen Steuerdatensatz entspricht (und z.B. über die Datenausgangsschnittstelle 16 ausgelesen wurde), auf der Grundlage der Referenzbetriebsparameter.

Weiter ist eine Überprüfungseinheit 28 vorgesehen, mittels derer auf der Grundlage des Modells 24 wenigstens ein virtueller Testbetrieb durchführbar ist, um das Erreichen der vorgegebenen Zulassungsvoraussetzungen zu überprüfen und wobei anhand des virtuellen Testbetriebs der virtuelle Steuerdatensatz mittels der Überprüfungseinheit 28 dahingehend überprüfbar ist, inwieweit dieser verändert werden muss, dass das Bremssystem 10 die vorgegebenen Zulassungsvoraussetzungen erreicht.

Mittels der Überprüfungseinheit 28 ist auch wenigstens ein Korrekturfaktor ermittelbar, um einen korrigierten virtuellen Steuerdatensatz zu erhalten.

Außerdem ist eine Korrektureinheit 30 vorgesehen, um den korrigierten virtuellen Steuerdatensatz über die Dateneingangsschnittstelle 14 zur Steuereinheit 12 des Bremssystems 10 zu übertragen, um auf der Grundlage des korrigierten Betriebsparameter wenigstens ein Überprüfungsbetrieb durchzuführen, um das Erreichen der vorgegebenen Zulassungsvoraussetzungen in der Realität zu überpüfen.

Der korrigierte Steuerdatensatz wird mittels der Korrektureinheit 30 in den Steuerdatensatzspeicher 18 eingespeichert bzw. entsprechend eingestellt. Dies kann analog und/oder digital erfolgen. Denkbar ist in diesem Zusammenhang, dass beispielsweise eine mechanische und/oder eine digitale bzw. elektronische Einstellmöglichkeit vorgesehen ist.

Beispielsweise kann eine Eingangsgröße in die Steuereinheit 12, die mittels der Korrektureinheit 30 eingestellt wird, der Druck in der Hauptleitung des Bremssystems z.B. eines Schienenfahrzeugs sein. Die Ausgangsgröße kann in diesem Fall der Bremsdruck sein. Als Dateneingangsschnittstelle 14 zur Eingabe des korrigierten Steuerdatensatzes, die in diesem Fall zur Einstellung des Bremsdrucks des Bremssystems 10 genutzt wird, kann eine Stellschraube und/oder ein digitales Interface vorgesehen sein.

Wenn die Einstellung über ein digitales Interface vorgenommen wird, dann kann die Übertragung des korrigierten Steuerdatensatzes automatisch oder auch halbautomatisch erfolgen.

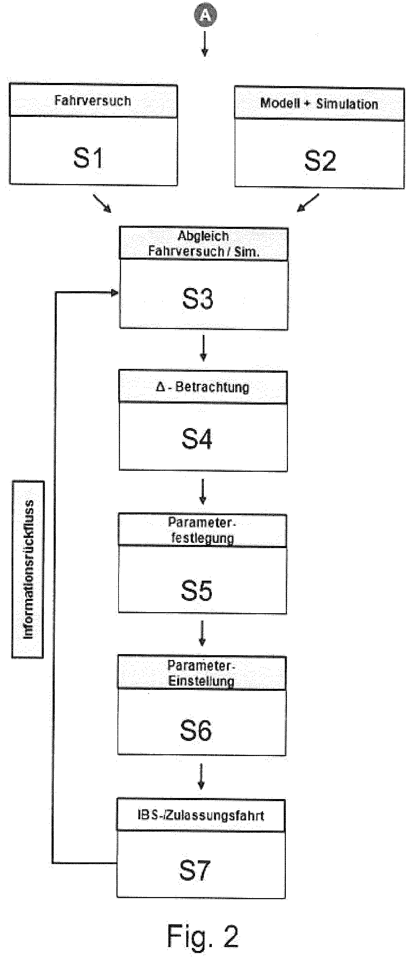

**Fig. 2** zeigt schematisch den Einsatz eines erfindungsgemäßen Ausführungsbeispiels eines Verfahrens und Systems zur Inbetriebnahme des Bremssystems 10 zur Reduktion von Fahrzeug-Testfahrten während des Inbetriebsetzungs- bzw. Zulassungsprozesses von Schienenfahrzeugen.

Der Einstiegspunkt in das Verfahren bzw. der Ausgangspunkt A ist die Beauftragung einer dynamischen Inbetriebsetzung (IBS) im Rahmen einer Fahrzeugzulassung.

Bisher wird für eine Fahrzeugzulassung eine Teststrecke angemietet und teilweise über Nacht in Fahrversuchen die Fahrzeugparameter durch auf dem Fahrzeug tätige Techniker ermittelt.

Auch nach dem erfindungsgemäßen Ausführungsbeispiels des Verfahrens wird in einem Schritt 1 S1 ein Fahrversuch, nämlich ein sogenannter Referenzbetrieb durchgeführt.

Innerhalb des Fahrversuchs werden Parameter wie beispielsweise
- Bremsweg
- Luftverbrauch
- Ansprechverhalten Gleitschutz
- Ansprechzeit Bremse
- Befüllzeiten
erhoben.

Es wird also in Schritt 1 S1 ein Referenzbetrieb durchgeführt und wenigstens eine Art von realen Referenzbetriebsparametern des pneumatischen Systems erfasst.

Nun wird nach dem Einstiegspunkt parallel zum Fahrversuch in Schritt 1 S1 ein Simulationsmodell des gesamten Fahrzeugs (Gesamtsystem des Schienenfahrzeugs) aufgebaut (Schritt 2 S2).

Das Simulationsmodell gründet auf dem funktionellen Fahrzeugmodell mit den diesem Modell zugewiesenen technischen Parametern.

Zu diesen technischen Parameter gehören, jedoch nicht ausschließlich:
- Reibwerte wie z.B. Bremsbelag/Bremsscheibe, Rad/Schiene
- Fahrzeuggewicht
- Bremskraft
- Höchstgeschwindigkeit
- Bremskraftverteilung
- Ansprechverhalten auf Komponentenbasis
- Steuergerätalgorithmen

Optional können weitere Parameter ermittelt werden. Zu diesen gehören beispielsweise, aber nicht ausschließlich:
- Behältergrößen
- Rohrleitungsdurchmesser
- Rohrleitungslängen
- Druckabfall in Leitungen, Reibungsverluste

Somit wird auf der Grundlage der Referenzbetriebsparameter ein virtuelles Modell des Bremssystems mit einem initialen virtuellen Steuerdatensatz, der dem initialen Steuerdatensatz entspricht, erstellt.

Nach Fertigstellung des Simulationsmodells wird das Systemverhalten des Fahrzeugs simuliert.

Parameter, die bei der Simulation des Systemverhaltens des Fahrzeugs bestimmt werden sind unter anderem, jedoch nicht ausschließlich
- Bremsweg
- Luftverbrauch
- Befüllzeiten

Zusätzlich können weitere Parameter, untenstehend beispielhaft gelistet, ermittelt werden:
- Ansprechverhalten Gleitschutz
- Ansprechzeit Bremse
- Energieverbräuche
- Relativgeschwindigkeiten/Schlupf

Innerhalb der Simulation werden Zustandsgleichungen für das betrachtete System aufgestellt und gelöst. Dabei werden typischerweise nichtlineare differentialalgebraische Gleichungssysteme aufgestellt. Im Normalfall müssen dabei geeignete Zeitintegrationsverfahren eingesetzt werden. Teilsysteme können auch durch Zustandsautomaten beschrieben und gelöst werden.

Bei der Simulation werden auch historische Daten unter Verknüpfung mit Erfahrungswerten genutzt, um das virtuelle Fahrzeug geeignet zu beschreiben.

Durch den Abgleich des Modells mit historischen Versuchsdaten wird das virtuelle Fahrzeug angepasst.

Mit anderen Worten wird auf der Grundlage des Modells wenigstens ein virtueller Testbetrieb durchgeführt, um das Erreichen der vorgegebenen Zulassungsvoraussetzungen zu überprüfen.

Nachdem die Ergebnisse des Fahrversuchs (Schritt 1 S1 und der Simulation vorliegen (Schritt 2 S2), werden diese miteinander abgeglichen und die technischen Parameter der Simulation (virtuelles Fahrzeug), falls nötig, angepasst/feinjustiert, sodass die Simulationsergebnisse den realen Fahrversuchsergebnissen entsprechen und somit das Simulationsmodell (virtuelles Fahrzeug) dem realen Fahrzeug entspricht (Schritt 3 S3).

Im nächsten Schritt 4 S4 werden die Simulationsergebnisse des virtuellen Fahrzeugs (resp., da deckungsgleich, die Ergebnisse des Fahrversuchs) mit den normativen Anforderungen wie beispielsweise für eine Fahrzeugzulassung abgeglichen. Es findet ein Soll/Ist-Vergleich statt, der feststellt, ob das virtuelle Fahrzeug die Zulassungsanforderungen einhält.

Im weiterführenden Schritt ist zu beachten, dass der Zustand des Testfahrzeuges und des Simulationsmodells absichtlich voneinander abweichend gestaltet werden können, um in der Simulation Zustände zu erfassen, die am realen Fahrzeug nicht oder nur mit hohem Aufwand darstellbar sind.

Hierdurch kann sowohl die Aussagefähigkeit der Zulassung erhöht werden, als auch der Aufwand von Versuchsfahrten am realen Fahrzeug reduziert werden.

Anhand des virtuellen Testbetriebs wird also der virtuelle Steuerdatensatz dahingehend überprüft, inwieweit dieser verändert werden muss, dass das pneumatische System die vorgegebenen Zulassungsvoraussetzungen erreicht und wenigstens ein Korrekturfaktor wird ermittelt, um einen korrigierten virtuellen Steuerdatensatz zu erhalten. Auf der Grundlage des korrigierten Betriebsparameter wird dann wenigstens ein Überprüfungsbetrieb durchgeführt, um das Erreichen der vorgegebenen Zulassungsvoraussetzungen in der Realität zu überpüfen.

Ein initialer, ein virtueller oder korrigierter virtueller Steuerdatensatz können einen Wert bzw. Werte umfassen, der bzw. die im Zusammenhang mit einer Bremskraft und/oder einer Bremskraftverteilung und/oder einem Steuergerätealgorithmus des Bremssystems in Verbindung steht bzw. stehen.

Falls die Zulassungsanforderungen eingehalten werden, so finden keine weiteren Aktionen statt. Für den Fall von Abweichungen werden am virtuellen Fahrzeug die technischen Parameter angepasst, bis die Zulassungsanforderungen erfüllt sind. Diese technischen Parameter werden festgelegt und dem Fahrversuchstechniker mitgeteilt (Schritt 5 S 5).

Die ermittelten technischen Parameter können daraufhin durch den Fahrversuchstechniker am realen Fahrzeug eingestellt (Schritt 6 S6) und eine IBS- bzw. Zulassungsfahrt durchgeführt (Schritt 7 S7) werden. Unter geeigneten Voraussetzungen kann auf die Zulassungsfahrt verzichtet werden. Die IBS in Kombination mit der Simulation des virtuellen Fahrzeugs ist in diesem Falle als Basis für die Zulassung heranzuziehen.

Durch den Einsatz von Simulationsmodellen mit technischen Parametern können Versuchstage auf der Teststrecke vermieden und/oder die Anzahl der Teststreckentage reduziert werden. Unter geeigneten Voraussetzungen kann eine finale IBS- oder Zulassungsfahrt eingespart werden.

Es werden Iterationsschleifen vermieden, die durch einen Fahrzeugtest, Neueinstellung der technischen Parameter am realen Fahrzeug und erneutem Fahrzeugtest, entstehen.

Es findet eine Rückmeldung der letztgültigen Werte an die Simulation zum Abgleich letzter Stand reales Fahrzeug / virtuelles Fahrzeug statt.

### BEZUGSZEICHENLISTE

- 10: Bremssystem
- 12: Steuereinheit
- 14: Dateneingangsschnittstelle
- 16: Datenausgangsschnittstelle
- 18: Steuerdatensatzspeicher
- 19: initaler Steuerdatensatz
- 20: Sensoren
- 22: Simulationseinheit
- 24: virtuelles Modell
- 26: initialer virtuellen Steuerdatensatz
- 28: Überprüfungseinheit
- 30: Korrektureinheit
- A: Ausgangspunkt
- S1: Schritt 1
- S2: Schritt 2
- S3: Schritt 3
- S4: Schritt 4
- S5: Schritt 5
- S6: Schritt 6
- S7: Schritt 7

## Patentansprüche

1. Verfahren zur Inbetriebnahme eines Bremssystems mit vorgegebenen Zulassungsvoraussetzungen, wobei das Bremssystem zumindest anteilig eine Reibungsbremse aufweist, wobei das Bremssystem weiter eine Steuerung mit einem initialen Steuerdatensatz zur Ansteuerung des Bremssystems im Betrieb aufweist, umfassend wenigstens die folgenden Schritte:
- Es wird ein Referenzbetrieb durchgeführt und wenigstens eine Art von realen Referenzbetriebsparametern des Bremssystems erfasst, wobei der Referenzbetrieb mindestens eine Testfahrt umfasst;
- es wird auf der Grundlage der Referenzbetriebsparameter ein virtuelles Modell des Bremssystems mit einem initialen virtuellen Steuerdatensatz, der dem initialen Steuerdatensatz entspricht, erstellt;
- auf der Grundlage des Modells wird wenigstens ein virtueller Testbetrieb durchgeführt, um das Erreichen der vorgegebenen Zulassungsvoraussetzungen zu überprüfen;
- anhand des virtuellen Testbetriebs wird der virtuelle Steuerdatensatz dahingehend überprüft, inwieweit dieser verändert werden muss, dass das Bremssystem die vorgegebenen Zulassungsvoraussetzungen erreicht und wenigstens ein Korrekturfaktor wird ermittelt, um einen korrigierten virtuellen Steuerdatensatz zu erhalten.

2. Verfahren nach Anspruch 1, **dadurch gekennzeichnet, dass** auf der Grundlage der korrigierten Betriebsparameter wenigstens ein Überprüfungsbetrieb durchgeführt wird, um das Erreichen der vorgegebenen Zulassungsvoraussetzungen in der Realität zu überprüfen.

3. Verfahren nach Anspruch 1 oder Anspruch 2, **dadurch gekennzeichnet, dass** ein initialer und/oder initialer virtueller und/oder korrigierter virtueller Steuerdatensatz wenigstens einen Wert umfasst, der im Zusammenhang mit einer Bremskraft und/oder einer Bremskraftverteilung und/oder einem Steuergerätealgorithmus des Bremssystems in Verbindung steht.

4. Verfahren nach einem der vorhergehenden Ansprüche, **dadurch gekennzeichnet, dass** auf der Grundlage der korrigierten Betriebsparameter der initiale Steuerdatensatz derart abgeändert wird, dass das Bremssystem den Zulassungsvoraussetzungen genügt.

5. Verfahren nach Anspruch 1 oder Anspruch 2, **dadurch gekennzeichnet, dass** ein Überprüfungsvorgang der Betriebsparameter anhand des virtuellen Testbetriebs eine Unterschiedsbetrachtung von virtuellem Testbetrieb und von Referenzbetrieb umfasst.

6. Verfahren nach Anspruch 5, **dadurch gekennzeichnet, dass** die Unterschiedsbetrachtung eine Unterschiedsbetrachtung von virtuellem Testbetriebs und von Referenzbetrieb im Vergleich zu den vorgegebenen Zulassungsvoraussetzungen ist.

7. Verfahren nach einem der vorhergehenden Ansprüche, **dadurch gekennzeichnet, dass** der virtuelle Testbetrieb die Überprüfung umfasst, ob das virtuelle Modell mit dem initialen virtuellen Steuerdatensatz oder mit dem während des Testbetriebs modifizierten virtuellen Steuerdatensatz die vorgegebenen Zulassungsvoraussetzungen erfüllt.

8. Verfahren nach Anspruch 7, **dadurch gekennzeichnet, dass** ein virtueller Steuerdatensatz, der die vorgegebenen Zulassungsvoraussetzungen erfüllt, als korrigierter Steuerdatensatz auf das mechanische System übertragen wird.

9. Verfahren nach einem der vorhergehenden Ansprüche, **dadurch gekennzeichnet, dass** das Bremssystem eine pneumatische und/oder hydraulische Bremsanlage, insbesondere eine pneumatische und/oder hydraulische Bremsanlage eines Schienenfahrzeugs ist.

10. Verfahren nach einem der vorhergehenden Ansprüche, **dadurch gekennzeichnet, dass** ein Referenzbetriebsparameter ein Parameter ist, der mittelbar oder unmittelbar Luftverbrauch, Bremsweg, Ansprechverhalten, Gleitschutz, Ansprechzeit, Bremse, Befüllzeiten, Reibwerte, Fahrzeuggewicht, Bremskraft, Höchstgeschwindigkeit, Bremskraftverteilung, Ansprechverhalten auf Komponentenbasis, Steuergerätealgorithmen, Behältergrößen, Rohrleitungsdurchmesser, Rohrleitungslängen und/oder Druckabfall in Leitungen, Reibungsverluste, Energieverbrauch, Relativgeschwindigkeiten und/oder Schlupf des Bremssystems beschreibt.

11. System zur Inbetriebnahme eines Bremssystems (10) mit vorgegebenen Zulassungsvoraussetzungen, wobei das Bremssystem zumindest anteilig eine Reibungsbremse aufweist, wobei das System wenigstens umfasst:
- Ein Bremssystem (10) mit wenigstens einer Steuereinheit (12), wobei die Steuereinheit (12) wenigstens eine Dateneingangsschnittstelle (14) und wenigstens eine Datenausgangsschnittstelle (16) sowie wenigstens Steuerdatensatzspeicher (18) aufweist;
- wenigstens einen Sensor (20) zur Erfassung einer Art von realen Referenzbetriebsparametern des Bremssystems (10) in einem Referenzbetrieb, wobei der Referenzbetrieb mindestens eine Testfahrt umfasst;
- wenigstens eine Simulationseinheit (22) zur Erzeugung eines virtuelles Modells (24) des Bremssystems (10) mit einem initialen virtuellen Steuerdatensatz (26), der dem initialen Steuerdatensatz (19) entspricht, auf der Grundlage der Referenzbetriebsparameter;
- wenigstens eine Überprüfungseinheit (28), mittels derer auf der Grundlage des Modells wenigstens ein virtueller Testbetrieb durchführbar ist, um das Erreichen der vorgegebenen Zulassungsvoraussetzungen zu überprüfen und wobei anhand des virtuellen Testbetriebs der virtuelle Steuerdatensatz mittels der Überprüfungseinheit (28) dahingehend überprüfbar ist, inwieweit dieser verändert werden muss, dass das pneumatische System (10) die vorgegebenen Zulassungsvoraussetzungen erreicht und wobei mittels der Überprüfungseinheit (28) wenigstens ein Korrekturfaktor ermittelbar ist, um einen korrigierten virtuellen Steuerdatensatz zu erhalten.

12. System nach Anspruch 11, **dadurch gekennzeichnet, dass** weiter wenigstens eine Korrektureinheit (30) vorgesehen ist, um den korrigierten virtuellen Steuerdatensatz zur Steuereinheit (12) des Bremssystems (10) zu übertragen, um auf der Grundlage des korrigierten Betriebsparameter wenigstens ein Überprüfungsbetrieb durchzuführen, um das Erreichen der vorgegebenen Zulassungsvoraussetzungen in der Realität zu überprüfen.

13. System nach Anspruch 11 oder 12, **dadurch gekennzeichnet, dass** das Bremssystem (10) eine pneumatische und/oder hydraulische Bremsanlage, insbesondere eine pneumatische und/oder hydraulische Bremsanlage eines Schienenfahrzeugs ist.

14. System nach einem der Ansprüche 11 bis 13, **dadurch gekennzeichnet, dass** mittels des Systems das Verfahren nach einem der Ansprüche 1 bis 10 durchführbar ist.

## Claims

1. A method for commissioning a brake system with predefined approval requirements, the brake system comprising at least a friction brake, the brake system also comprising a control system having an initial control data set for actuating the brake system during operation, comprising at least the following steps:
- a reference operation is carried out and at least one type of real reference operating parameters of the brake system is detected, the reference operation comprising at least one test run;
- a virtual model of the brake system having an initial virtual control data set corresponding to the initial control data set is produced on the basis of the reference operating parameters;
- at least one virtual test operation is carried out on the basis of the model in order to check that the predefined approval requirements have been achieved;
- the virtual control data set is checked using the virtual test operation in order to determine the extent to which it needs to be changed in order for the brake system to achieve the predefined approval requirements, and at least one correction factor is determined in order to obtain a corrected virtual control data set.

2. A method according to claim 1, **characterised in that** at least one check operation is carried out on the basis of the corrected operating parameters in order to check that the predefined approval requirements have been achieved in reality.

3. A method according to claim 1 or 2, **characterised in that** an initial and/or initial virtual and/or corrected virtual control data set comprises at least one value that is connected to a braking force and/or a braking force distribution and/or a control device algorithm of the brake system.

4. A method according to any one of the preceding claims, **characterised in that** the initial control data set is modified on the basis of the corrected operating parameters such that the brake system satisfies the approval requirements.

5. A method according to claim 1 or 2, **characterised in that** an operating parameter checking process carried using the virtual test operation involves considering the differences between the virtual test operation and the reference operation.

6. A method according to claim 5, **characterised in that** this consideration of differences considers the differences between the virtual test operation and the reference operation in comparison with the predefined approval requirements.

7. A method according to any one of the preceding claims, **characterised in that** the virtual test operation comprises a check of whether the virtual model having the initial virtual control data set or having the virtual control data set modified during the test operation satisfies the predefined approval requirements.

8. A method according to claim 7, **characterised in that** a virtual control data set that satisfies the predefined approval requirements is transmitted to the mechanical system in the form of a corrected control data set.

9. A method according to any one of the preceding claims, **characterised in that** the brake system is a pneumatic and/or hydraulic brake assembly, in particular a pneumatic and/or hydraulic brake assembly of a rail vehicle.

10. A method according to any one of the preceding claims, **characterised in that** a reference operating parameter is a parameter that directly or indirectly describes air consumption, braking distance, response behaviour, anti-skid protection, response time, brakes, filling times, friction coefficients, vehicle weight, braking force, maximum speed, braking force distribution, component-based response behaviour, control device algorithms, reservoir sizes, pipeline diameters, pipeline lengths and/or brake line pressure drop, friction losses, energy consumption, relative speeds and/or brake system slip.

11. A system for commissioning a brake system (10) with predefined approval requirements, the brake system comprising at least a friction brake, the system comprising at least:
- a brake system (10) having at least one control unit (12), the control unit (12) having at least one data input interface (14), at least one data output interface (16) and at least control data set memory (18);
- at least one sensor (20) for detecting a type of real reference operating parameters of the brake system (10) in a reference operation, the reference operation comprising at least one test run;
- at least one simulation unit (22) for generating a virtual model (24) of the brake system (10) having an initial virtual control data set (26) corresponding to the initial control data set (19) on the basis of the reference operating parameters;
- at least one checking unit (28) by means of which at least one virtual test operation can be carried out on the basis of the model in order to check that the predefined approval requirements have been achieved, it being possible using the virtual test operation to check the virtual control data set by means of the checking unit (28) in order to determine the extent to which it must be changed in order for the pneumatic system (10) to achieve the predefined approval requirements and it being possible by means of the checking unit (28) to determine at least one correction factor in order to obtain a corrected virtual control data set.

12. A system according to claim 11, **characterised in that**, further, at least one correction unit (30) is provided to transmit the corrected virtual control data set to the control unit (12) of the brake system (10), to carry out at least one checking operation on the basis of the corrected operating parameter and to check that the predefined approval requirements have been achieved in reality.

13. A system according to claim 11 or 12, **characterised in that** the brake system (10) is a pneumatic and/or hydraulic brake assembly, in particular a pneumatic and/or hydraulic brake assembly of a rail vehicle.

14. A system according to any one of claims 11 to 13, **characterised in that** the method according to any one of claims 1 to 10 can be carried out by means of the system.

## Revendications

1. Procédé de mise en service d'un système de frein à des conditions d'autorisation données à l'avance, le système de frein ayant au moins en partie, un frein à friction, le système de frein ayant, en outre, une commande ayant un jeu de données de commande initial pour commander le système de frein en fonctionnement, comprenant au moins les stades suivants :
- on effectue un fonctionnement de référence et on détecte au moins un type de paramètres de fonctionnement de référence réels du système de frein, le fonctionnement de référence comprenant au moins un trajet de test ;
- on établit, sur la base des paramètres de fonctionnement de référence, un modèle virtuel du système de frein avec un jeu de données de commande virtuel initial, qui correspond au jeu de données de commande initial ;
- sur la base du modèle, on effectue au moins un fonctionnement de test virtuel, afin de contrôler l'obtention des conditions d'autorisation données à l'avance ;
- à l'aide du fonctionnement de test virtuel et du jeu de données de commande virtuel, on contrôle dans quelle mesure cela doit être modifié pour que le système de frein atteigne les conditions d'autorisation données à l'avance et on détermine au moins un facteur de correction, afin d'obtenir un jeu de données de commande virtuel corrigé.

2. Procédé suivant la revendication 1, **caractérisé en ce que**, sur la base des paramètres de fonctionnement corrigés, on effectue au moins un fonctionnement de contrôle pour contrôler l'obtention en réalité des conditions d'autorisation données à l'avance.

3. Procédé suivant la revendication 1 ou la revendication 2, **caractérisé en ce qu'**un jeu de données de commande virtuel initial et/ou virtuel, initial et/ou virtuel corrigé, comprend au moins une valeur, qui est en liaison avec une force de freinage et/ou une répartition de force de freinage et/ou un algorithme d'appareil de commande du système de frein.

4. Procédé suivant l'une des revendications précédentes, **caractérisé en ce que**, sur la base des paramètres de fonctionnement corrigés, on modifie le jeu de données de commande initial, de manière à ce que le système de frein satisfasse les conditions d'autorisation.

5. Procédé suivant la revendication 1 ou la revendication 2, **caractérisé en ce qu'**une opération de contrôle des paramètres de fonctionnement, à l'aide du fonctionnement de test virtuel, comprend une considération de la différence entre le fonctionnement de test virtuel et le fonctionnement de référence.

6. Procédé suivant la revendication 5, **caractérisé en ce que** la considération de la différence est une considération de la différence entre le fonctionnement de test virtuel et le fonctionnement de référence par rapport aux conditions d'autorisation données à l'avance.

7. Procédé suivant l'une des revendications précédentes, **caractérisé en ce que** le fonctionnement de test virtuel comprend le contrôle du point de savoir si le modèle virtuel, avec le jeu de données de commande virtuel initial ou avec le jeu de données de commande virtuel modifié pendant le fonctionnement de test, satisfait les conditions d'autorisation données à l'avance.

8. Procédé suivant la revendication 7, **caractérisé en ce que** l'on transmet un jeu de données de commande, qui satisfait les conditions d'autorisation données à l'avance, au système mécanique, sous la forme d'un jeu de données de commande corrigé.

9. Procédé suivant l'une des revendications précédentes, **caractérisé en ce que** le système de frein est un système de frein pneumatique et/ou hydraulique, notamment un système de frein pneumatique et/ou hydraulique d'un véhicule ferroviaire.

10. Procédé suivant l'une des revendications précédentes, **caractérisé en ce qu'**un paramètre de fonctionnement de référence est un paramètre, qui décrit directement ou indirectement une consommation d'air, une distance d'arrêt, une réponse, un antidérapage, un temps de réponse, un freinage, des temps de remplissage, des coefficients de friction, un poids de véhicule, une force de freinage, une vitesse la plus grande, une répartition des forces de freinage, une réponse sur la base d'un élément, des algorithmes d'appareil de commande, des dimensions de récipient, des diamètres de canalisation, des longueurs de canalisation et/ou une chute de pression dans des conduits, des pertes par frottement, une consommation d'énergie, des vitesses relative et/ou un glissement du système de frein.

11. Système de mise en service d'un système (10) de frein à des conditions d'autorisation données à l'avance, le système de frein ayant, au moins en partie, un frein à friction, le système comprenant au moins :
- un système (10) de frein, ayant au moins une unité (12) de commande, l'unité (12) de commande ayant au moins une interface (14) d'entrée de données et au moins une interface (16) de sortie de données, ainsi qu'au moins une mémoire (18) de jeu de données de commande ;
- au moins un capteur (20) de détection d'un type de paramètres de fonctionnement de référence réels du système (10) de frein dans un fonctionnement de référence, le fonctionnement de référence comprenant au moins un trajet de test ;
- au moins une unité (22) de simulation pour produire un modèle (24) virtuel du système (10) de frein par un jeu (26) de données de commande virtuel initial, qui correspond au jeu (19) de données de commande initial sur la base des paramètres de fonctionnement de référence ;
- au moins une unité (28) de contrôle, au moyen de laquelle on peut, sur la base du modèle, effectuer au moins un fonctionnement de test virtuel, afin de contrôler l'obtention des conditions d'autorisation données à l'avance et dans lequel, à l'aide du fonctionnement de test virtuel, on peut contrôler le jeu de données de commande virtuel au moyen de l'unité (28) de contrôle sur le point de savoir dans quelle mesure elle doit être modifiée pour que le système (10) pneumatique atteigne les conditions d'autorisation données à l'avance et dans lequel, au moyen de l'unité (28) de contrôle, on peut déterminer au moins un facteur de correction, afin d'obtenir un jeu de données de commande virtuel corrigé.

12. Système suivant la revendication 11, **caractérisé en ce qu'**il est prévu, en outre, au moins une unité (30) de correction pour transmettre le jeu de données de commande virtuel corrigé à l'unité (12) de commande du système (10) de frein et pour, sur la base du paramètre de fonctionnement corrigé, effectuer au moins un fonctionnement de contrôle, afin de contrôler l'obtention en réalité des conditions d'autorisation données à l'avance.

13. Procédé suivant la revendication 11 ou 12, **caractérisé en ce que** le système (10) de frein est un système de frein pneumatique et/ou hydraulique, notamment un système de frein pneumatique et/ou hydraulique d'un véhicule ferroviaire.

14. Procédé suivant l'une des revendications 11 à 13, **caractérisé en ce que** le procédé suivant l'une des revendications 1 à 10, peut être effectué au moyen du système.
